# DEMANDE DE BREVET EUROPEEN

(11) **EP 2 687 399 A1**
(43) Date de publication de la demande: **22.01.2014**
(21) Numéro de dépôt: 13176736.0
(22) Date de dépôt: 16.07.2013
(51) Int. Cl.: B60M 1/20, B60M 1/24

(54) **Dispositif de suspension d'un câble porteur de caténaire**

(30) Priorité: 18.07.2012 FR 1256932
(71) Demandeur: Société Nationale des Chemins de Fer Français - SNCF, 75014 Paris (FR)
(72) Inventeur: Gouverneur, Claude, 28190 MITTAINVILLIERS (FR)
(74) Mandataire: Argyma

(57) **Abrégé**

Dispositif de suspension d'un câble porteur de caténaire au-dessus d'une ligne ferroviaire comprenant une pièce d'attache adaptée pour être reliée à un poteau et un support de câble (30), agencé pour supporter le câble porteur, qui est articulé à la pièce d'attache autour d'un axe de rotation horizontal (A) au moyen d'une tige de fixation, dispositif caractérisé en ce qu'une bague d'articulation (60) est montée au niveau de l'extrémité supérieure (32) du support de câble (30) de manière à isoler le support de câble (30) de la tige de fixation.

## Description

La présente invention concerne le domaine des installations ferroviaires et, plus particulièrement, celui des équipements pour l'alimentation en courant électrique des locomotrices circulant sur les voies.

Dans le but de transmettre du courant électrique aux trains circulant sur une voie ferrée, un fil conducteur appelé fil de contact est disposé au-dessus de la voie ferrée. Il alimente en courant des pantographes qui sont situés sur la partie supérieure de la locomotrice. Un pantographe est un dispositif qui permet à une locomotrice électrique de capter le courant par frottement sur le fil de contact.

Afin de supporter le fil de contact au-dessus de la voie ferrée, des poteaux supports sont disposés, de loin en loin le long de la voie. Ils comportent, chacun, un système de maintien du fil de contact comprenant un hauban et une console, placés en porte à faux par rapport au poteau support et disposés de façon à former un triangle dans un plan vertical au niveau de la partie supérieure du poteau.

Un fil de contact seul tendu entre deux poteaux consécutifs, qui peuvent être relativement éloignés l'un de l'autre, forme une Ligne de Contact Simple (LCS) avec une faible souplesse du plan de contact. Or le captage du courant aux vitesses élevées (supérieure à 110km/h) nécessite que la ligne de contact simple offre une souplesse adéquate. A des vitesses classiques, ce manque de souplesse provoquera un captage totalement dégradé qui aura pour conséquence de générer des arcs électrique qui détérioreront le fil de contact et entraîneront sa rupture. Et surtout, à grande vitesse, la relation pantographe et fil conducteur ne pourra pas être assurée.

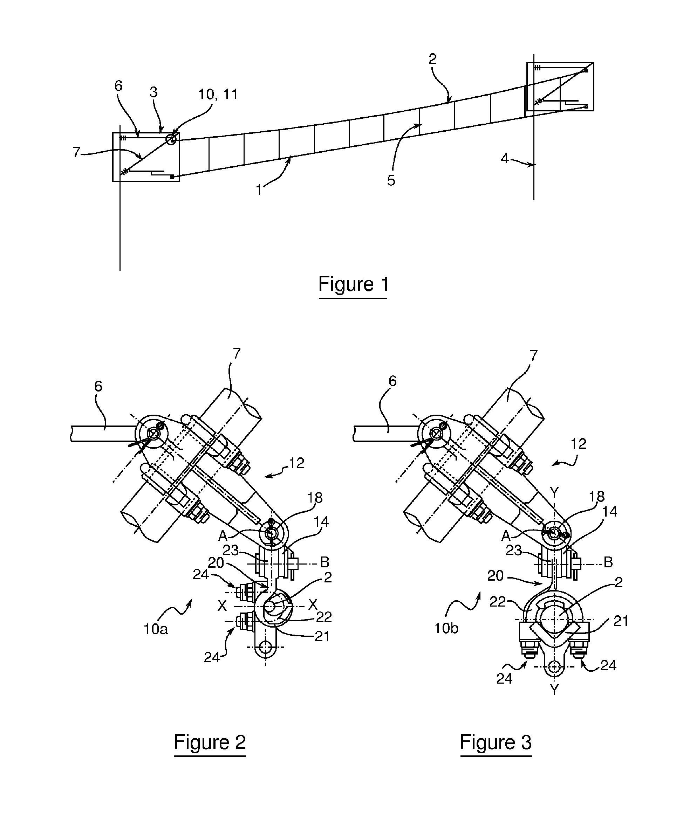

Une solution connue, illustrée par la figure 1, consiste à suspendre le fil de contact 1 à un câble porteur 2 qui est, lui, suspendu à chaque poteau 4 par l'intermédiaire du système de maintien 3 et qui prend une forme arquée entre deux poteaux 4 consécutifs. Le fil de contact 1 est alors suspendu au câble porteur 2 par l'intermédiaire d'une succession de câbles verticaux 5, dénommés pendules, dont les longueurs sont adaptées pour maintenir le fil de contact 1 sensiblement horizontal entre les poteaux 4. L'ensemble formé par le fil de contact 1, le câble porteur 2 et les pendules 5 est dénommé caténaire (ou Ligne Aérienne de Contact).

Comme illustré par la figure 1, le système de maintien 3 d'une caténaire comprend un hauban 6, une console 7 et un dispositif de suspension 10 agencé pour relier le hauban 6, la console 7 et le câble porteur 2.

Deux dispositifs de suspension 10a et 10b connus, illustrés respectivement par les figures 2 et 3, comprennent chacun une pièce d'attache 12 du hauban 6 et de la console 7 et un support de câble 20 comprenant une portion de réception 21 de section transversale arrondie ou coudée formant une gorge dans laquelle repose le câble porteur 2, le support 20 étant relié à la pièce d'attache 12 par un cardan 14. Afin de solidariser le câble porteur 2 sur le support de câble 20, deux étriers 22 en forme de U sont positionnés à cheval sur le câble porteur 2 de part et d'autre du support 20 et fixés à celui-ci par quatre ensembles 24 de vis et d'écrous. Dans le dispositif de suspension 10a illustré par la figure 2, la portion de réception 21 se présente sous la forme d'un crochet dont la concavité est tournée vers le haut pour recevoir un câble porteur de faible diamètre, par exemple un câble nu. Les branches des étriers 22 sont orientées selon un axe horizontal X-X perpendiculaire à l'axe horizontal selon lequel s'étend le câble porteur 2. Dans le dispositif de suspension 10b illustré par la figure 3, la portion de réception 21 se présente sous la forme d'une gouttière agencée pour recevoir un câble porteur de diamètre plus important, par exemple un câble protégé comprenant une couche de revêtement, et les branches des étriers 22 sont orientées d'après un axe vertical Y-Y perpendiculaire à l'axe horizontal selon lequel s'étend le câble porteur 2.

De manière classique, chaque cardan 14 des dispositifs de suspension 10a, 10b est adapté pour autoriser, d'une part, un déplacement selon un premier axe de rotation horizontal A parallèle à l'axe selon lequel s'étend le câble porteur 2 et, d'autre part, un déplacement selon un deuxième axe de rotation horizontal B perpendiculaire à l'axe selon lequel s'étend le câble porteur 2.

Pour former le premier axe de rotation horizontal A, la pièce d'attache 12 comprend, au niveau de son extrémité inférieure, deux bras de chape comportant chacun un orifice traversant. L'extrémité supérieure du cardan 14 comporte une oreille, non représentée montée entre les bras de chape de la pièce d'attache 12 pour permettre le passage d'une première tige de fixation 18 s'étendant selon l'axe A. De manière similaire, le cardan 14 comprend, au niveau de son extrémité inférieure, deux bras de chape comportant chacun un orifice traversant. L'extrémité supérieure du support de câble 20 comporte une oreille 23 montée entre les bras de chape du cardan 14 pour permettre le passage d'une seconde tige de fixation 19 s'étendant selon l'axe B.

La pièce d'attache 12, le cardan 14 et le support de câble 20 sont constitués d'un alliage cupro-aluminium tandis que les tiges de fixation 18 et 19 sont constituées d'acier inoxydable. Cependant, de telles articulations présentent plusieurs inconvénients quant à la qualité de la liaison.

Tout d'abord, de tels matériaux en mouvement dynamique peuvent se corroder aisément l'un l'autre, notamment du fait de leur couple électrolytique élevé, de l'ordre de 350 mV (alors que la norme NF E 25-032 préconise un couple de 200 mV maximum). Une telle corrosion peut affaiblir voire entraîner une rupture de l'articulation, ce qui présente un premier inconvénient.

De plus, de telles articulations sont fréquemment soumises à la pollution atmosphérique, par exemple au soufre rejeté par les gaz d'échappements ou les usines, et/ou aux conditions climatiques, telles par exemple la pluie et la chaleur, qui peuvent à terme contribuer à accélérer la corrosion et réduire l'efficacité de la liaison pivot, par exemple en entraînant un grippage de l'articulation, ce qui présente un second inconvénient.

En outre, les frictions provoquées par l'articulation des différentes pièces autour des liaisons pivots, notamment autour de l'axe de rotation A du cardan avec la pièce d'attache, qui est l'articulation la plus sollicitée, peuvent conduire à l'apparition d'un amalgame abrasif et corrosif susceptible d'entrainer le grippage de ces liaisons voire la rupture d'une pièce du dispositif tel que, par exemple, les bras de chape de la pièce d'attache, ce qui présente un troisième inconvénient.

Enfin, le nombre de constituants des dispositifs de suspension connus est important, notamment en termes de coût, de difficulté et de temps de montage, ce qui présente un quatrième inconvénient.

La présente invention a pour but de remédier au moins en partie à ces inconvénients en proposant un dispositif de suspension d'un câble porteur qui soit à la fois simple, aisé à assembler et résistant aux contraintes physiques et chimiques auxquelles il peut être exposé.

A cet effet, l'invention a pour objet un dispositif de suspension d'un câble porteur de caténaire au-dessus d'une ligne ferroviaire comprenant une pièce d'attache adaptée pour être reliée à un poteau et un support de câble, agencé pour supporter le câble porteur, qui est articulé à la pièce d'attache autour d'un axe de rotation horizontal au moyen d'une tige de fixation. Le dispositif est remarquable en ce qu'une bague d'articulation est montée au niveau de l'extrémité supérieure du support de câble de manière à isoler le support de câble de la tige de fixation.

Une telle bague d'articulation permet d'éviter un contact direct entre le support de câble et la tige de fixation tout en autorisant néanmoins leur rotation relative, ce qui permet d'absorber une partie des forces transmises lors du passage d'un pantographe ou sous l'action du vent. La bague d'articulation constitue une interface entre le support de câble et la tige de fixation qui ne sont ainsi plus en contact direct. De ce fait, la zone de frottement de l'articulation ne se situe plus directement entre le support de câble et la tige de fixation mais entre la bague d'articulation et la tige de fixation, empêchant la corrosion par couplage électrolytique. Le support de câble et la tige de fixation peuvent ainsi être constitués respectivement de cupro-aluminium et d'acier inoxydable sans que leur couplage électrolytique ne génère de corrosion. L'efficacité d'un tel dispositif permet ainsi de réaliser la maintenance moins fréquemment. Par ailleurs, le montage du support de câble sur la pièce d'attache permet de réduire le nombre de constituants du dispositif de suspension puisqu'il n'est plus nécessaire d'utiliser un cardan entre les deux éléments.

De préférence, le support de câble est directement relié à la pièce d'attache par la tige de fixation. Par le terme « directement », on entend qu'il n'y a pas de pièce intermédiaire reliant le support de câble et la pièce d'attache autre que la tige de fixation et la bague d'articulation. Il n'y a pas, par exemple, de cardan reliant le support de câble et la pièce d'attache. Ainsi, le support de câble est articulé à la pièce d'attache autour d'un unique axe de rotation. La suppression du cardan de l'art antérieur réduit en outre le nombre de liaison pivot puisqu'une seule liaison pivot est utilisée entre le support de câble et la pièce d'attache au lieu de deux, ce qui permet de se dispenser d'une liaison pivot sans apport fonctionnel dans le dispositif de suspension.

De préférence encore, la bague d'articulation est solidaire du support de câble, de sorte que l'articulation se fasse relativement entre la bague d'articulation et la tige de fixation.

De manière avantageuse, le support de câble comprend, au niveau de son extrémité supérieure, une oreille de liaison à l'intérieur de laquelle s'étend la bague d'articulation, par exemple montée à force dans l'oreille de liaison, la tige de fixation étant montée coaxialement dans la bague d'articulation.

La bague d'articulation peut se présenter sous la forme d'une pièce longitudinale de longueur sensiblement égale à celle du cylindre d'articulation. De préférence, la longueur de la bague d'articulation est inférieure à la longueur de la tige de fixation.

Avantageusement, la bague d'articulation est constituée d'un d'alliage cuivreux, par exemple de la marque déposée CN8^{®}, ou d'un alliage d'acier-inox ou d'un alliage de bronze, de préférence avec des inserts de graphite et/ou au moins un joint d'étanchéité, de préférence deux joints d'étanchéité. Cette dernière composition offre une bonne résistance aux contraintes mécaniques, climatiques ou environnementales auxquelles l'articulation entre le support de câble et la tige de fixation peut être soumise. Les inserts de graphite confère un faible coefficient de friction à la surface de la bague, ils ne nécessitent pas d'entretien et sont particulièrement utilisés dans des applications d'oscillations intermittentes impliquant de fortes charges et rendant difficile la formation de tout film lubrifiant (endurant sans lubrification, faible coefficient de friction, charge élevée, résistance à l'usure, à la corrosion et aux agents chimiques). La bague peut être soumise à de fortes températures en extérieur, le métal peut chauffer jusqu'à environ 80°C. Le graphite ne présente pas de perte, contrairement à l'huile, et peut monter ou descendre en température sans perdre ses qualités de lubrification.

Selon une forme de réalisation de l'invention, la pièce d'attache comprend, au niveau de son extrémité de liaison au support de câble, une chape comprenant des moyens de blocage de la tige de fixation par rapport à la pièce d'attache de manière à empêcher la rotation de la tige de fixation par rapport à la pièce d'attache. Un tel verrouillage en rotation permet d'éviter les frictions et les contraintes mécaniques de la tige de fixation sur la chape qui pourraient entraîner un affaiblissement, notamment de la chape, ou la création d'un amalgame corrosif et abrasif entre la tige de fixation et la chape. Les moyens de blocage peuvent aussi permettre un verrouillage en translation de la tige de fixation par rapport à la chape de sorte que la tige reste solidaire de la chape.

De préférence, les moyens de blocage comprennent une protubérance et une goupille, la protubérance et la tige de fixation étant traversées par la goupille en position de verrouillage de la tige.

L'invention concerne aussi un ensemble comprenant un dispositif de suspension, tel que défini ci-dessus, et un câble porteur disposé et maintenu dans le support de câble du dispositif de suspension par la bride de serrage.

De préférence, la tige de fixation est sensiblement parallèle à l'axe le long duquel s'étend le câble porteur. Un balancement latéral du dispositif de suspension est ainsi rendu possible lorsque le câble porteur se déplace sous l'action d'une force externe tel que le vent ou le passage d'un pantographe. Par ailleurs, l'unique liaison pivot entre la pièce d'attache et le support de câble permet au dispositif de suspension de résister à des efforts pouvant aller jusqu'à 773daN, par exemple tels que ceux provoqués par un montage installé pour soutenir une caténaire type LGV (Ligne à Grande Vitesse).

L'invention concerne en outre un système de maintien d'un câble porteur de caténaire au-dessus d'une ligne ferroviaire comportant un hauban et une console adaptés pour être montés sur un poteau et un dispositif de suspension tel que défini ci-dessus dont la pièce d'attache est reliée au hauban et à la console.

D'autres caractéristiques et avantages de l'invention apparaîtront lors de la description qui suit faite en regard des figures annexées données à titre d'exemples non limitatifs et dans lesquelles des références identiques sont données à des objets semblables.
La figure 1 illustre une caténaire suspendue au-dessus d'une ligne ferroviaire par une pluralité de poteaux.
La figure 2 illustre un premier dispositif de suspension de l'art antérieur.
La figure 3 illustre un second dispositif de suspension de l'art antérieur.
La figure 4 représente schématiquement en vue de côté du dispositif de suspension selon l'invention.
La figure 5 est une vue en perspective du dispositif de la figure 4.
La figure 6 représente schématiquement en vue de face un corps de pièce d'attache.
La figure 7 est une vue transversale d'un support de câble selon l'invention.
La figure 8 est une vue en coupe longitudinale d'une bague d'articulation selon l'invention.

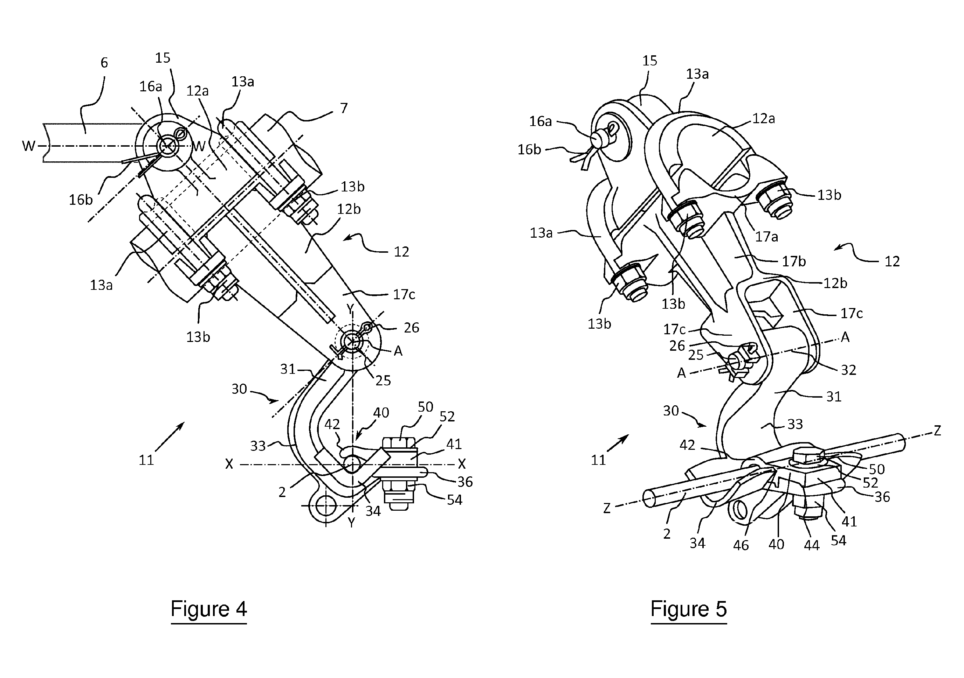

La figure 1 représente la suspension d'une caténaire comprenant un fil de contact 1 et un câble porteur 2. Le fil de contact 1 est suspendu au câble porteur 2 par une pluralité de pendules 5. Le câble porteur 2 est suspendu à chaque poteau 4 disposé le long de la voie ferroviaire par un système de maintien 3. Le câble porteur 2 s'étend horizontalement selon un axe Z-Z illustré à la figure 5. Un tel système de maintien 3 comprend un hauban 6, une console 7 et un dispositif de suspension 11 agencé pour relier le hauban 6, la console 7 et le câble porteur 2.

Le hauban 6 est disposé sensiblement horizontalement entre le poteau 4 et le dispositif de suspension 11 selon un axe W-W parallèle à l'axe horizontal X-X, orthogonalement à l'axe Z-Z selon lequel s'étend le câble porteur 2.

La console 7 est disposée obliquement entre le poteau 4 et le dispositif de suspension 11 de sorte à former, avec le hauban 6, un triangle de maintien du dispositif de suspension 11 au poteau 4 s'étendant dans un plan transversal à l'axe Z-Z selon lequel s'étend le câble porteur 2.

Le dispositif de suspension 11 selon l'invention illustré par les figures 4 et 5 comprend une pièce d'attache 12, reliant le hauban 6 et la console 7, et un support de câble 30, relié à la pièce d'attache 12, dans lequel est disposé le câble porteur 2.

La pièce d'attache 12 comprend un capot 12a et un corps 12b. Par la suite, les termes « inférieur » et « supérieur » sont utilisés relativement à un dispositif de suspension 11 en position d'utilisation dans un système de maintien 3 d'une caténaire suspendue au-dessus d'une voie ferrée.

En référence à la figure 4, le capot 12a est agencé, d'une part, pour recevoir une extrémité d'attache du hauban 6 et, d'autre part, pour maintenir une portion de la console 7 par coopération avec le corps 12b au moyen d'un système d'étriers 13a et d'écrous 13b comme cela sera détaillé par la suite. Chaque étrier 13a se présente sous la forme d'une pièce en forme de U dont les extrémités filetées sont fixées sur le corps 12b par les écrous 13b.

Afin de réaliser le montage du hauban 6 sur la pièce d'attache 12, le capot 12a comprend, au niveau de sa partie supérieure, une chape 15 comportant deux orifices traversant latéralement et agencés pour recevoir une tige de fixation 16a du hauban 6 maintenu par une goupille 16b.

Comme illustré à la figure 5, le capot 12a comprend, dans sa partie inférieure, une portion arrondie agencée pour recevoir une portion de la console 7 de section circulaire. De même, le corps 12b comprend, dans sa partie supérieure, une portion arrondie 17a agencée pour recevoir une portion de la console 7 de section circulaire. Autrement dit, le capot 12a et le corps 12b permettent de maintenir fermement la portion de la console 7 par complémentarité de formes. La console 7 est solidarisée entre le capot 12a et le corps 12b par deux étriers 13a en forme de U entourant le capot 12a et fixés au niveau de la partie supérieure du corps 12b par les écrous 13b.

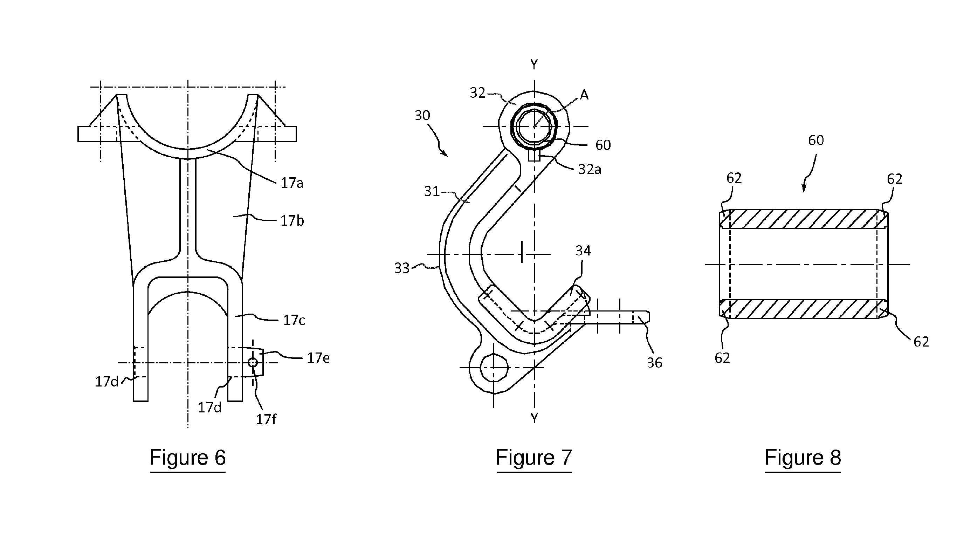

Le corps 12b comprend en outre, au niveau de sa partie inférieure, une chape 17c de liaison avec le support de câble 30 reliée à la portion arrondie 17a par un bras de liaison 17b, comme illustré par les figures 5 et 6. La chape 17c comprend deux orifices 17d traversant de chaque côté agencés pour recevoir une tige de fixation 25 et une protubérance de réception 17e d'une goupille 26 de maintien de la tige de fixation 25. La protubérance de réception 17e comprend un orifice de réception 17f de la goupille 26. La tige de fixation 25 comprend de même un orifice de réception, non représenté, de la goupille 26.

Contrairement aux dispositifs de suspension de l'art antérieur comportant un cardan, le support de câble 30 du dispositif de suspension 11 selon l'invention est directement monté sur la pièce d'attache 12 par une liaison pivot d'axe horizontal comportant la tige de fixation 25 et la goupille 26, comme illustré par les figures 4 et 5.

Dans la forme de réalisation illustrée par les figures 4, 5 et 7, le support de câble 30 se présente sous la forme d'un bras coudé 31 ayant sensiblement la forme d'un C. Le bras 31 est fixé au niveau de son extrémité supérieure 32, se présentant sous la forme d'une oreille de liaison, à la chape de liaison 17c par l'intermédiaire de la tige de fixation 25 et de la goupille 26 comme illustré à la figure 5.

Le bras 31 comprend, au niveau de sa partie inférieure, une gouttière 34 configurée pour recevoir le câble porteur 2. La gouttière 34 possède une section sensiblement en forme de V dont l'ouverture est d'environ 90° et est configurée pour recevoir des câbles de différents diamètres. La gouttière 34 s'étend selon la direction Z-Z selon laquelle s'étend le câble porteur 2, c'est-à-dire, parallèlement à la tige de fixation 25. La longueur de la gouttière 34 est supérieure à la largeur du bras 31 définie selon l'axe Z-Z de manière à fournir un effort de maintien réparti sur le câble porteur 2.

Comme illustré par les figures 4 et 7, le bras 31 et la gouttière 34 sont agencés de sorte que l'axe du câble porteur 2 et la tige de fixation 25 du support de câble 30 sur la pièce d'attache 12 soient sensiblement dans le même plan vertical Y-Y.

Le support de câble 30 du dispositif de suspension 11 selon l'invention comprend en outre une plateforme 36 agencée pour recevoir une bride de serrage 40 du câble porteur 2 illustrée par les figures 4 et 5. La plateforme 36 s'étend sensiblement parallèlement à un axe horizontal X-X, c'est-à-dire, perpendiculairement à l'axe Z-Z selon lequel s'étend le câble porteur 2.

La bride de serrage 40 illustrée par les figures 4 et 5 se présente sous la forme d'une pièce longitudinale, de préférence en métal, comportant une extrémité de fixation 41 reliée à la plateforme 36 et une extrémité libre en appui sur le câble porteur 2 pour le pincer afin de le maintenir dans la gouttière 34. La bride de serrage 40 comporte une portion de maintien arquée 42 agencée pour être positionnée sur la périphérie du câble porteur 2 de manière à épouser sa forme et limiter son débattement. A cet effet, la courbure de la portion de maintien arquée est adaptée à celle du câble porteur 2.

L'extrémité de fixation 41 comprend un orifice de réception, non représenté, d'une vis 50 et une butée 44 d'appui de la bride de serrage 40 sur la plateforme 36. La bride de serrage 40 est fixée sur la plateforme 36 au niveau de son extrémité de fixation par un système comprenant la vis 50, une rondelle d'appui sphérique 52 et un écrou 54. De plus, la rondelle d'appui sphérique 52 permet de garantir une répartition uniforme du serrage sur la plateforme 36 et le câble porteur 2 grâce à l'auto-centrage de la vis 50.

Comme illustré par les figures 5 et 7, la largeur de la bride de serrage 40 est sensiblement égale à celle de la plateforme 36 et à celle du bras 32. De plus, la bride de serrage 40 est logée en appui dans un évidemment 46 ménagé dans la gouttière 34 de sorte à être bloquée en translation dans la direction de l'axe Z-Z du câble porteur 2. Ainsi, la bride de serrage 40 n'est pas entraînée par le câble porteur 2 si celui-ci subit un déplacement le long de l'axe Z-Z.

Selon l'invention et comme illustré par la figure 7, l'extrémité supérieure du support de câble 30 se présente sous la forme d'un cylindre d'articulation 32 à l'intérieur duquel s'étend, coaxiale, une bague d'articulation 60, par exemple montée à force.

La bague d'articulation 60 se présente sous la forme d'une pièce longitudinale de longueur sensiblement égale à celle du cylindre d'articulation 32. De préférence, la longueur de la bague d'articulation 60 est inférieure à la longueur de la tige de fixation 25.

Dans une forme de réalisation particulière, la bague d'articulation 60 est constituée d'un alliage d'acier-inox, ou d'un alliage de bronze, par exemple avec des inserts de graphite et deux joints d'étanchéité, ou bien encore un d'alliage cuivreux, par exemple de la marque déposée CN8^{®}.

Dans la forme de réalisation illustrée par la figure 8, la bague d'articulation 60 comprend, des extrémités 62 dont les bords sont évasés, ce qui permet d'insérer aisément la bague d'articulation 60 dans le cylindre d'articulation 32.

La bague d'articulation 60 est une bague de frottement dite « d'usure » configurée pour autoriser les frictions. La bague d'articulation 60 sert d'interface entre deux matériaux non compatibles électrolytiquement. La bague d'articulation 60 confère au dispositif de suspension 11 une importante durée d'utilisation, par exemple, supérieure à 15 ans, de sorte que la maintenance du dispositif de suspension 11 peut être réalisée moins souvent.

La bague d'articulation 60 peut être changée après usure, son changement peut être exécuté, par exemple, par un montage à la presse de la bague d'articulation de substitution qui chasse la bague d'articulation usée.

Comme illustré par la figure 7, le support de câble 30 du dispositif de suspension 11 selon l'invention possède un repère visuel se présentant sous la forme d'une fenêtre, d'une profondeur d'environ 1mm, encrée de part et d'autre du cylindre d'articulation 32. Ce repère 32a devient visible lorsque la bague d'articulation 60 atteint un certain niveau d'usure, indiquant alors que celle-ci devrait être changée.

Lors du montage du support de câble 30 sur la pièce d'attache 12, le cylindre d'articulation 32 est d'abord disposé coaxialement dans l'axe des orifices traversant 17d des bras de la chape 17c. La tige de fixation 25 est ensuite montée coaxialement, à travers les orifices 17d des bras de la chape 17c, traversant ainsi la bague d'articulation. La tige de fixation 25 est alors solidarisée à la protubérance 17e du bras de chape 17c par la goupille 26 qui est insérée à travers l'orifice de réception 17f de la protubérance 17e et à travers l'orifice de réception de la tige de fixation 25 de sorte que la tige de fixation 25 soit verrouillée en rotation.

Le support de câble 30 ainsi monté est articulé en rotation, au niveau de la bague d'articulation 60 et de la tige de fixation 25, celle-ci étant alors sensiblement parallèle à l'axe Z-Z le long duquel s'étend le câble porteur 2, comme illustré par les figures 4 et 5.

Lors de la mise en oeuvre du dispositif de suspension selon l'invention, la bague d'articulation 60 permet à la fois d'autoriser la rotation du support de câble 30 par rapport à la tige de fixation 25, ce qui permet d'absorber une partie des forces transmises lors du passage d'un pantographe ou sous l'action du vent, et d'éviter la corrosion, puis le grippage de l'articulation, qui pourrait être provoquées par le couple électrolytique des matériaux constituants le support de câble et la tige de fixation ou par des conditions climatiques ou environnementales ou des frictions entre le support de câble et la tige de fixation.

## Revendications

1. Dispositif de suspension d'un câble porteur (2) de caténaire au-dessus d'une ligne ferroviaire comprenant une pièce d'attache (12) adaptée pour être reliée à un poteau (4) et un support de câble (30), agencé pour supporter le câble porteur (2), qui est articulé à la pièce d'attache (12) autour d'un axe de rotation horizontal (A-A) au moyen d'une tige de fixation (25), le dispositif (11) est **caractérisé par** une bague d'articulation (60) qui est montée au niveau de l'extrémité supérieure (32) du support de câble (30) de manière à isoler le support de câble (30) de la tige de fixation (25).

2. Dispositif selon la revendication 1, dans lequel le support de câble (30) est directement relié à la pièce d'attache (12) par la tige de fixation (25).

3. Dispositif selon la revendication 1, dans lequel la bague d'articulation (60) est solidaire du support de câble (30).

4. Dispositif selon l'une des revendications précédentes, dans lequel le support de câble (30) comprend, au niveau de son extrémité supérieure, une oreille de liaison (32) à l'intérieur de laquelle s'étend la bague d'articulation (60), la tige de fixation (25) étant monté coaxialement dans la bague d'articulation (60).

5. Dispositif selon l'une des revendications 3 et 4, dans lequel la bague d'articulation (60) se présente sous la forme d'une pièce longitudinale de longueur sensiblement égale à celle de l'oreille de liaison (32).

6. Dispositif selon l'une des revendications précédentes, dans lequel la longueur de la bague d'articulation (60) est inférieure à la longueur de la tige de fixation (25).

7. Dispositif selon l'une des revendications précédentes, dans lequel la bague d'articulation (60) est constituée d'un d'alliage cuivreux ou d'un alliage acier-inox ou d'un alliage de bronze, de préférence avec des inserts de graphite.

8. Dispositif selon l'une des revendications précédentes, dans lequel la pièce d'attache (12) comprend, au niveau de son extrémité de liaison au support de câble (30), une chape (17c) comprenant des moyens de blocage de la tige de fixation (25) par rapport à la pièce d'attache (12) de manière à empêcher la rotation de la tige de fixation (25) par rapport à la pièce d'attache (12).

9. Ensemble comprenant un dispositif de suspension (11), selon l'une des revendications précédentes, et un câble porteur (2) disposé et maintenu dans le support de câble (30) du dispositif de suspension (11), la tige de fixation (25) étant sensiblement parallèle à l'axe (Z-Z) le long duquel s'étend le câble porteur (2).

10. Système de maintien d'un câble porteur (2) de caténaire au-dessus d'une ligne ferroviaire comportant un hauban (6) et une console (7) adaptés pour être montés sur un poteau (4) et un dispositif de suspension (11), selon l'une des revendications précédentes 1 à 8, dont la pièce d'attache (12) est reliée au hauban (6) et à la console (7).
